# EUROPEAN PATENT APPLICATION

(11) **EP 1 628 205 A2**
(43) Date of publication of application: **22.02.2006**
(21) Application number: 05107590.1
(22) Date of filing: 18.08.2005
(51) Int. Cl.: G06F 3/12

(54) **Information processing apparatus**

(30) Priority: 20.08.2004 JP 2004240250
(71) Applicant: Oki Data Corporation, Tokyo 108-8551 (JP)
(72) Inventor: Kondo, Tomonori, Minato-ku, 108-8551, Tokyo (JP)
(74) Representative: Read, Matthew Charles

(57) **Abstract**

An information processing apparatus used for generating print data from image information and outputting to an external print equipment, includes a print data generator for converting image information into print data, a print data storage for storing the print data generated by the generator, a display device for previewing a preview image according to the print data stored in the print data storage, an input unit for inputting position information according to the preview image; and a print data processing unit for compiling the print data stored in the print data storage according to the position information inputted by the input unit. Therefore, whether the information processing apparatus has photoretouch application software used for generating image or not, the preview image can be processed and edited.

## Description

### FIELD OF THE INVENTION

The present invention is related to an information processing apparatus, and more particularly to an information processing apparatus used for generating print data according to a print job.

### BACKGROUND OF THE INVENTION

Usually, when an information processing apparatus such as a personal computer or the like sends a print job to an external print processor, a user should recognize the print preview before outputting print data. There are often some problems appears at this time, for example, the dimension of print image is beyond the limits of a print paper. On this occasion, the conventional information processing device, as disclosed in Official Gazette of Japanese Patent Application Laid-Open No. 2002-63000, deals with original image data by photoretouch application program such, converts the data formed by the application program into print data, and then transmits the print data to the print processor.

However, not all of print data transmitted from the information processing apparatus to the print processor is generated by a same application program in the information processing apparatus. For example, when using HTML (the languages used while compiling webpages) to display preview, print data generated by the other information processing apparatus will be received and inserted in the webpages directly. On this occasion, the other information processing apparatus may haven't such an application software that can deal with the print data. As a result, even if an insignificant matter such as the dimension of print image beyond the limits of the print paper as mentioned above occurs, it can't be revised and edited. Hence, an improved information processing apparatus for a print job is needed.

### SUMMARY OF THE INVENTION

The invention is made in consideration of the above problems and it is an object of the invention to provide an information processing apparatus which can easily revise and edit print data even without the photoretouch application software therein.

To accomplish the above object, according to the invention, one preferred embodiment of the present invention discloses an information processing apparatus comprising a print data generator for converting image information into print data, a print data storage for storing the print data generated by the generator, a display device for previewing a preview image according to the print data stored in the print data storage, an input unit for inputting position information according to the preview image; and a print data processing unit for compiling the print data stored in the print data storage according to the position information inputted by the input unit. Wherein the print data processing unit compiles the print data which is originally in different pages separated by a change-page position of the position information into new print data that in one page.

The other preferred embodiment of the present invention discloses an information processing apparatus comprising a print data generator for converting image information into print data, a print data storage for storing the print data generated by the generator, a display device for previewing a preview image according to the print data stored in the print data storage, a screen area determiner for determining a blank area on the preview image, and a print data processing unit for converting the print data stored in the print data storage according to the blank area determined by the screen area determiner.

Another preferred embodiment of the present invention discloses an information processing apparatus comprising a storage for storing first data, a display device for previewing a preview image according to the first data, an input unit for inputting position information according to the preview image, and a data processing unit for compiling the first data stored in the storage according to the position information inputted by the input unit so as to generating second data.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

FIG. 1 is a block diagram showing the overall constructions of an information processing apparatus according to the first embodiment of the present invention;
FIG. 2 is a block diagram showing the function of the information processing apparatus appearing in FIG. 1;
FIG. 3 is a flow chart which shown all processes of the information processing apparatus appear in FIG. 1;
FIG. 4 shows an example of printing setting screen;
FIG. 5 shows a configuration of print data;
FIG. 6 is a detailed flow chart of step s1-4;
FIG. 7 shows a preview image in the first embodiment;
FIG. 8 is a detailed flow chart of step s1-5;
FIG. 9 is an example of screen which shown management of an area below the change-page position;
FIG. 10 shows a configuration of change-page information;
FIG. 11 shows an example of the preview image after being first edited;
FIG. 12 is a flow chart of step s1-6;
FIG. 13 shows an example of the preview image after being edited again;
FIG. 14 shows another example of the preview image after being edited once more;
FIG. 15 is a block diagram showing the overall constructions of an information processing apparatus according to the second embodiment of the present invention;
FIG. 16 is a block diagram showing the function of the information processing apparatus appearing in FIG. 15;
FIG. 17 is a flow chart which shown all processes of the information processing apparatus appear in FIG. 15;
FIG. 18 is a flow chart of step s2-5;
FIG. 19 shows a preview image in the second embodiment;
FIG. 20 shows a change-page position auto-correction screen;
FIG. 21 is a block diagram showing the overall constructions of an information processing apparatus according to the third embodiment of the present invention;
FIG. 22 is a block diagram showing the function of the information processing apparatus appearing in FIG. 21;
FIG. 23 is a flow chart which shown all processes of the information processing apparatus appear in FIG. 21;
FIG. 24 is a flow chart of step s3-5;
FIG. 25 shows a preview image in the third embodiment;
FIG. 26 shows blank area setting screen; and
FIG.27 is a flow chart of step s3-6.

### DETAILED DESCRIPTION OF THE PREFERRED EMBODIMENT

According to the present invention, change-page setting function and print data processing function are achieved by applying designated programs executed by a CPU (central processing unit) of an information processing apparatus to print driving program of a print processor.

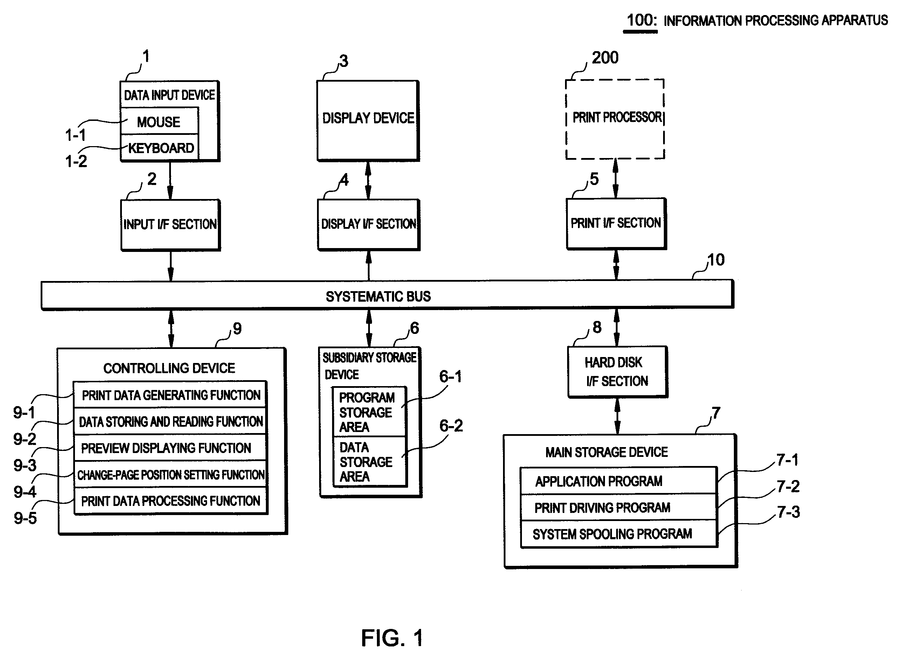

FIG. 1 is a block diagram showing the overall constructions of an information processing apparatus according to the first embodiment of the present invention. As shown in FIG. 1, the information processing apparatus 100 in the first embodiment comprises a data input device 1, an input I/F section 2, a display device 3, a display I/F section 4, a print I/F section 5, a subsidiary storage device 6, a main storage device 7, a hard disk I/F section 8, a controlling device 9 and a systematic bus 10.

The data input device 1 is an interface between a user and the information processing apparatus 100. The data input device 1 comprises a mouse 1-1 and a keyboard 1-2 and so on, which used for data input operating. The input I/F section 2 is arranged between the data input device 1 and the systematic bus 10 acting as an interface connecting with both of them.

The display device 3 is a liquid crystal display or the like, which is used for displaying preview. The display I/F section 4 is arranged between the display device 3 and the systematic bus 10 acting as an interface connecting with both of them. The print I/F section 5 is arranged between a print device 200 and the systematic bus 10 as an interface.

The subsidiary storage device 6 is used for temporarily storing programs or data which is read from the main storage device 7, and used as a RAM(Random-access Memory) during the controlling device 9 running application. The subsidiary storage device 6 includes a program storage area 6-1 for performing storage of program read from the main storage device 7, and a data storage area 6-2 used for storing data generated by the controlling device 9 during running application

The main storage device 7 has a hard disk space for preserving programs or data which is used for controlling the whole apparatus by the controlling device 9 in advance. The main storage device 7 stores an application program 7-1 for being executed by the information processing apparatus 100, a print driving program 7-2 and a system spooling program 7-3 therein. The print driving program 7-2 is used for successfully connecting the print processor or the like to the information processing apparatus 100. The system spooling program 7-3 is used for temporarily storing print data which is outputted to the print processor 200. The hard disk I/F section 8 is substantially an interface performing a communication control between the main storage device 7 and the systematic bus 10.

The controlling device 9 of the information processing apparatus 100 is substantially a CPU which is connected to the systematic bus 10. In this embodiment, the controlling device 9 could obtain print data generating function 9-1, data storing and reading function 9-2, preview displaying function 9-3, change-page position setting function 9-4, and print data processing function 9-5 by executing corresponding applications. The print data generating function 9-1 is to transform image data into print data by executing the print driving program 7-2 in the print processor 200. The data storing and reading function 9-2 is to read out data from the main storage device 7, and to write and store the data in the subsidiary storage device 6. The preview displaying function 9-3 is to display the pint data stored in the subsidiary storage device 6. The change-page position setting function 9-4 is to set position of changed page according to the result of the preview. The print data processing function 9-5 is to revise and edit the above-mentioned print data according to the predetermined change-page position. The systematic bus 10 is a signal line which is connect to the above component elements.

Detailed description about functions and signal flows of methods for achieving the print data generating function 9-1, the data storing and reading function 9-2, the preview displaying function 9-3, the change-page position setting function 9-4, and the print data processing function 9-5 through the controlling device 9 will now be given hereinbelow with reference to the drawings.

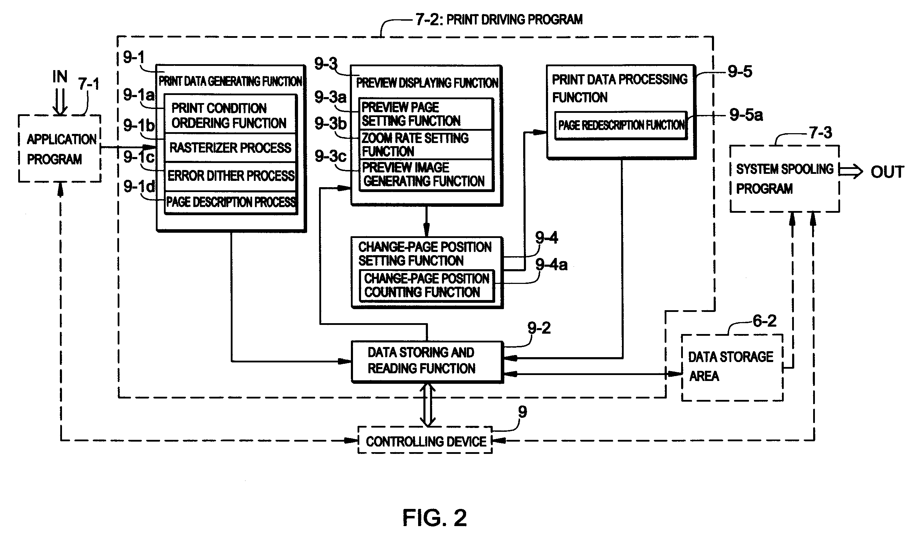

FIG. 2 is a block diagram showing the function of the information processing apparatus in the first embodiment. The print diving program 7-2 is read out from the main storage device 7 (FIG. 1) by the subsidiary storage device 6 (FIG. 1) and stored in the program storage area 6-1 of the subsidiary storage device 6, and is in the state that can be started at any time. Similarly, the application program 7-1 and the system spooling program 7-3 are read out from the main storage device 7 and then stored in the program storage area 6-1 (FIG. 1) of the subsidiary storage device 6, and are also in the startup state at any time.

Function of the above-mentioned method will be detailed described along the signal flow with reference to FIG. 2. Firstly, image information inputted through the keyboard 1-2 and the mouse 1-1 of the data input device 1 (shown in FIG. 1) by the user is transformed into image data via the application program 7-1. The image data is then sent to the print data generating function 9-1 and transformed into print data.

According to print request ordering function 9-1a, the image data is transformed to match for the predetermined format of the print processor 200 (shown in FIG. 1). Subsequently, the image data is rasterized to a bitmap image via rasterizer process 9-1b. After that, the bitmap image is converted into a binary image like using dense particles to represent image shade via dither process 9-1c. And thereafter, according to the page description process 9-1d to set change-page code as change-page position thereby generating print data.

The print data is stored in the data storage area 6-2 of the subsidiary storage device 6 (shown in FIG. 1) by the data storing and reading function 9-2. Subsequently, the print data is read out from the data storage area 6-2 by data storing and reading section and displayed in the display device 3 (shown in FIG. 1) via preview displaying function 9-3.

At this time, preview page setting function 9-3a will display image that need to be set according to user's operation in the data input device 1 (shown in FIG. 1). Zoom rate setting function 9-3b is used to set zoom rate. According to the above mentioned setting requests, the preview image is generated by the preview image generating function 9-3c and shown in the display device 3.

At this time, a change-page item of the change-page position setting function 9-4 is shown in preview image by the display device 3 for designating change-page position (which will be detailed discussed hereinafter). The change-page position setting function 9-4 designates the change-page position in the preview image according to the user's operation and works out the change-page position in the print data.

The print data in which the change-page position has been already setup is sent to the print data processing function 9-5 and compiled again according to the predetermined change-page position (which will be detailed discussed hereinafter). And thereafter, the recompiled print data is sent to the page redescription function 9-5a, and the change-page code is set. The print data is stored in the data storage area 6-2 again according to the data storing and reading function 9-2, and then is transmitted to the print processor 200 via the system spooling program7-3.

The processes of the information processing apparatus 100 in the first embodiment will be described now with reference to the flow chart. First to introduce an overall process of the information processing apparatus 100, and then to introduce the processes which relating to the present invention with reference to the more detailed flow chart.

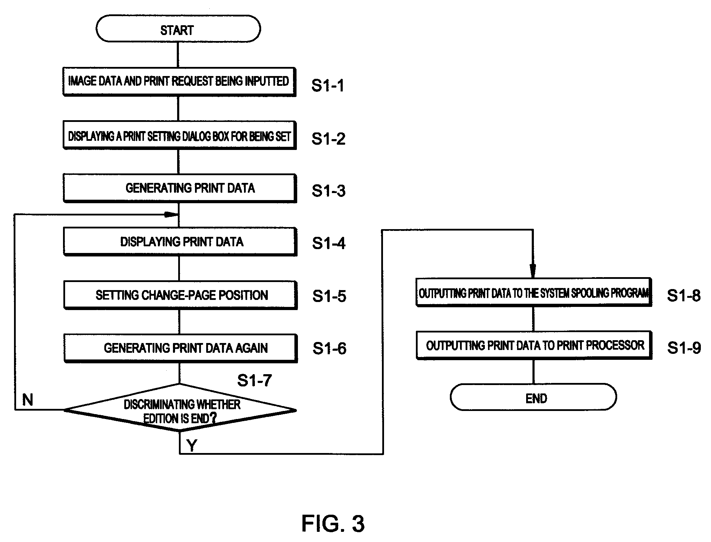

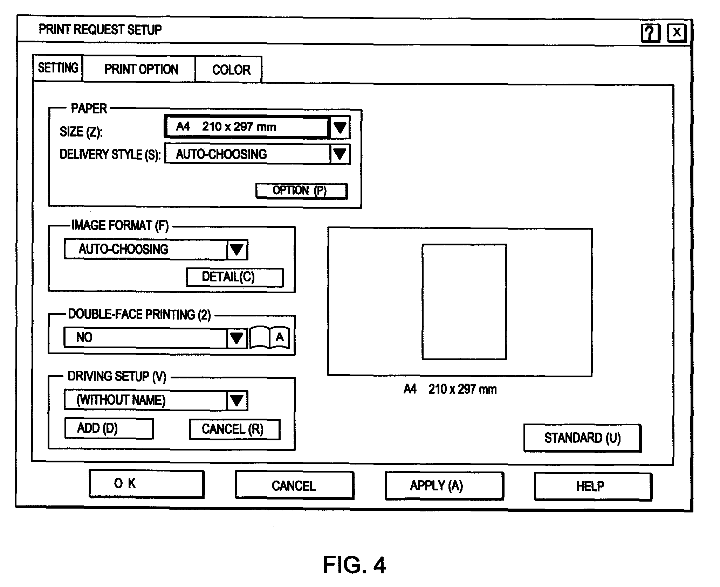

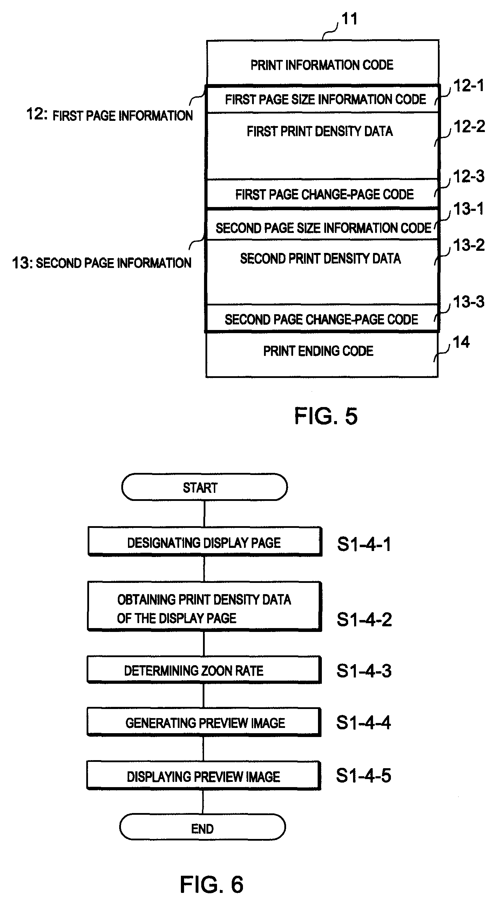

FIG. 3 is a flow chart which shown all processes of the information processing apparatus in the first embodiment. FIG. 3 is shown with a flow chart to explain signal flow in FIG. 2. FIG. 4 is a diagram showing an example of a printing setting screen. In FIG. 4, a dialog box that while the user setting print requests via the print data generating function 9-1 in FIG. 3. FIG. 5 is a diagram showing a configuration of the print data. FIG. 5 is an explanatory drawing showing the composition of print data in FIG. 3. Following drawings are step by step described all processes of the information processing apparatus100 from step s1-1 to step s1-9 shown in FIG. 3.

Step s1-1: a print job is generated. Step s1-2: a dialog box in FIG. 4 is displayed on the display device 3 via print data generating function 9-1 (shown in FIG. 2). The dialog box provides a plurality of options for inputting corresponding message, such as paper size (Z), paper delivery style (S), image format (F), double-face printing (2), driving setup (V), etc. The user can utilizes the mouse 1-1 and the keyboard 1-2 to choose the above mentioned options so as to complete the print request setting (print request ordering function 9-1a, shown in FIG. 2).

Step s1-3: after the print job was ordered, the image data is read out from the application program 7-1 via the print data generating function 9-1 (shown in FIG. 2) and the image data is rasterized to thereby generating the rasterized image data (the rasterizer process 9-1b, as shown in FIG. 2). The rasterized image data is processed through dither processing (dither process 9-1c, shown in FIG. 2) and various kinds of operations thereby generating print data. The various kinds of operations mentioned above include change-page code (the page description function 9-1d, shown in FIG. 2). Referring to FIG. 5, the print data contain print information code 11, first page information 12, second page information 13, and print ending code 14. The first page information 12 includes first page size information code 12-1, first print density data 12-2 and first page change-page code 12-3 (the second page information 13 is similar to the first page information 12). Here is only to take an example for the second page. The generated pint data is stored in the data storage area 6-2 via the data storing and reading function 9-2 (shown in FIG. 2).

Step s1-4: the print data is read out from the data storage area 6-2 via the data storing and reading function 9-2 (shown in FIG. 2), and then is displayed as a preview image (which will be described later) on the display device 3 (shown in FIG. 1) via the preview displaying function 9-3 (shown in FIG. 2). This step will be detailed explained later, now will enter the next step.

Step s1-5: the change-page strip is displayed on the display image by the display device 3 (shown in FIG. 1) via the change-page setting function 9-4 (shown in FIG. 2), which provides the user for designating the change-page position. The change-page position on the display image is designated via the change-page setting function 9-4 according to the user's designation. Change-page position counting function 9-4a works out the change-page position in the print data according to the designated change-page position on the display image. This step will be explained in detail later, now will enter the next step.

Step s1-6: the print data is compiled again via the print data processing function 9-5 (shown in FIG. 2) thereby generating the compiled print data. The compiled print data is stored in the data storage area 6-2 (shown in FIG. 2) via the data storing and reading function 9-2 (shown in FIG. 2). This step will be explained in detail later, here will enter the next step. Step s1-7: if the compiled print data needs to be continual compiled, go back to the step s1-4 and go on the same operation until finish compiling.

Step s1-8: the compiled print data is sent to the system spooling program 7-3. Step s1-9: the print data from the system spooling program 7-3 is outputted to the print processor200 (shown in FIG. 1), and then the procedure is over

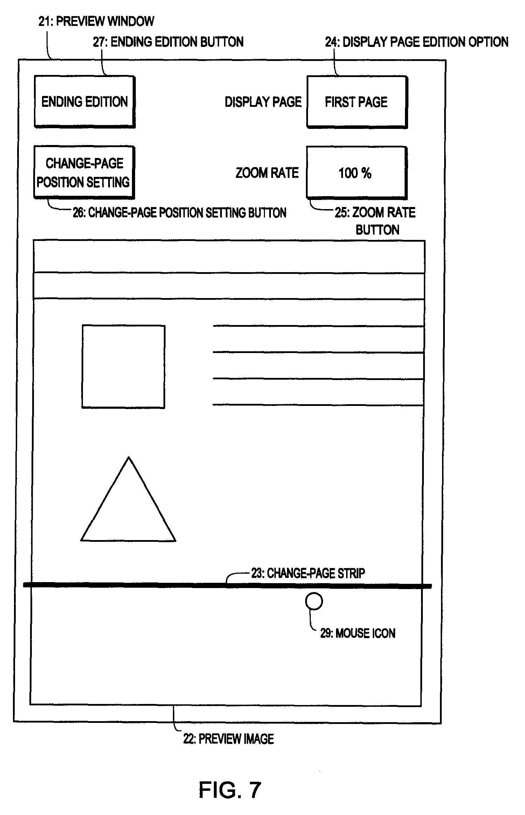

The following is a detailed illustration about the step s1-4, step s1-5 and step 1-6 in the flow chart shown in FIG. 3. FIG. 6 is a detailed flow chart of step s1-4 in the above mention flow chart shown in FIG. 3. FIG. 7 is a preview image in the first embodiment. FIG. 7 is used in the explanation of FIG. 6, and taken the preview image as an example. Referring to FIG. 7, in a preview window 21, a frame of the preview image 22, a change-page strip 23 in the frame provided for being designated the change-page position, and a mouse icon 29 used for drawing the change-page strip 23 are shown. Outside of the frame of the preview image 22, a display page edition option 24, a zoom rate option 25, a change-page position setting button 26, and an ending edition button 27 are all shown.

The content of the step s1-4 (shown in FIG. 3) will be illustrated detailedly step by step from step s1-4-1 to step s1-4-5 as follows

Step s1-4-1: the preview displaying function 9-3 provides a display page edition option 24 for the user to insert the page he/she wants (display page edition function 9-3a, as shown in FIG. 2). Step s1-4-2: the preview displaying function 9-3 (shown in FIG. 2) captures the generated print data generated by the print data generating function 9-1 (shown in FIG. 2) in the above mentioned step s1-3 or the print density data generated by the print data processing function 9-5 (shown in FIG. 2) in the above mentioned step s1-6.

Step s1-4-3: the preview displaying function 9-3 (shown in FIG. 2) provides the zoom rate button 25 for the user to insert the expected zoom rate (Zoom rate setting function 9-3b, as shown in FIG. 2). Step s1-4-4: in accordance with the result of the steps from s1-4-1 to s1-4-3, the preview displaying function 9-3 (shown in FIG. 2) generates the preview image (preview image generating function 9-3c, as shown in FIG. 2). Step s1-4-5: the preview displaying function 9-3 (shown in FIG. 2) displays the preview image in the frame of the preview window 21, and the procedure is over.

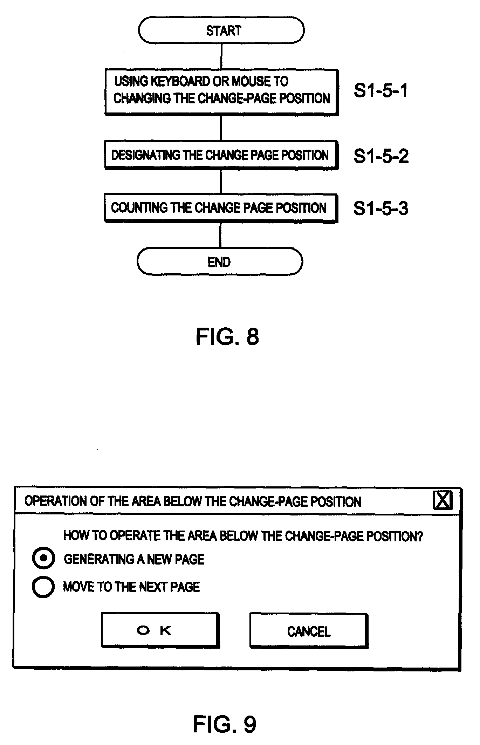

The following is a detailed description about the step s1-5 in the flow chat shown in FIG. 3. FIG. 8 is a detailed flow chart of step s1-5 in the above mentioned flow chart shown in FIG. 3. The following is a detailed description by an order from step s1-5-1 to s1-5-3 with reference to FIG. 7.

Step s1-5-1: the change-page strip 23 is drawn to the expected position by the mouse 1-1 or the keyboard 1-2 (shown in FIG. 1). Step s1-5-2: after the change-page setting button 26 was pushed to designate the change-page position by the mouse 1-1 (shown in FIG. 1), the change-page setting function 9-4 will change the change-page position to this designated position and provide a choose request for the user about how to deal with the print data below the designated change-page position.

FIG. 9 is an example of screen which shown management of an area below the change-page position. FIG. 9 shows the data processing of the area below the change-page position after the change-page position determined. FIG. 9 provides a dialog for the user to choose "generating a new page" (code 0) or "move to the next page" (code 1).

Step s1-5-3: the change-page setting function 9-4 (shown in FIG. 2) works out the change-page position in accordance with the designated change-page position and determined data processing of the area below the designated change-page position by the user. The following is an example about this content.

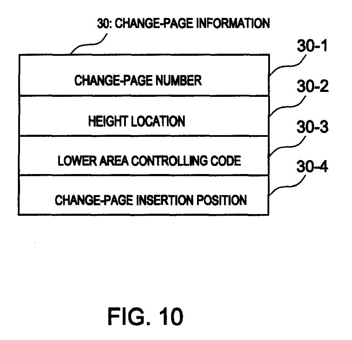

FIG. 10 is a configuration of change-page information. This drawing is shown a configuration of the change-page information 30 which is generated by executing change-page position counting function 9-4a of the change-page setting function 9-4 (shown in FIG. 2) according to the above mentioned choosing result in FIG. 9 after the user pushed the change-page setting button 26 (shown in FIG. 7) and designated the change-page position through the mouse 1-1 (shown in FIG. 1).

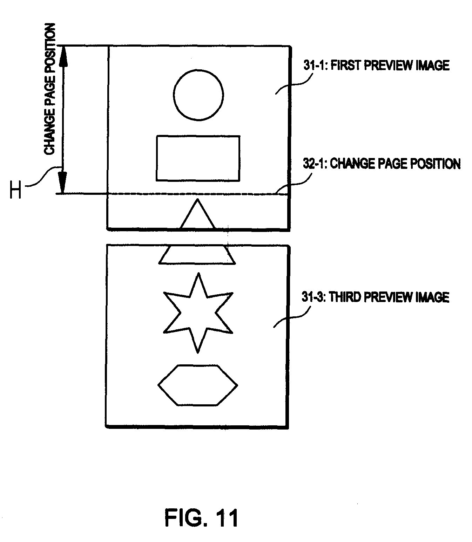

FIG. 11 is an example of the preview image after being first edited. For example, a round, a square, a triangle, a star and a rhombus are disposed in two pages. Referring to FIG. 11, the preview image 31-1 of the first preview image contains the round, the square and one part of the triangle, and the preview image 32-1 of the second preview image contains the other part of the triangle, the star and the rhombus. In FIG. 11, it is supposed that the user designates the change-page position at the position 32-1 and chooses the area below the change-page position as "generating a new page" (code)

Here, the change-page position counting function 9-4a of the change-page position setting function 9-4 (shown in FIG. 2) generates a new page with change-page number 30-1 and height location 30-2 (which is denoted with H) according to the change-page position 32-1 in FIG. 11 and the choosing result (code 0) in FIG. 9, and obtains the above mentioned all messages which are taken as the change-page information 30 in FIG. 10. However, of all the messages, the change-page position 32-1 is changed into a beginning position of the print data. The whole process including multiplying the width W of the print data which contain the first page size information code 12-1 (shown in FIG.5) by the height H which is a distance from beginning position to the change-page position 32-1, multiplying by the reciprocal of the zoom rate S in the display zoom rate button (shown in FIG. 7), thereafter, multiplying by the size D of one pixel thereby generating data, and adding the data of the previous display page to the generated data thereby coming into being a value. The value is taken as a change-page insertion position 30-4 since beginning. The change-page information 30 captured from the above mentioned process is temporarily stored in the data storage area 6-2 (shown in FIG. 2). The step s1-5 is over after carry out the above processes.

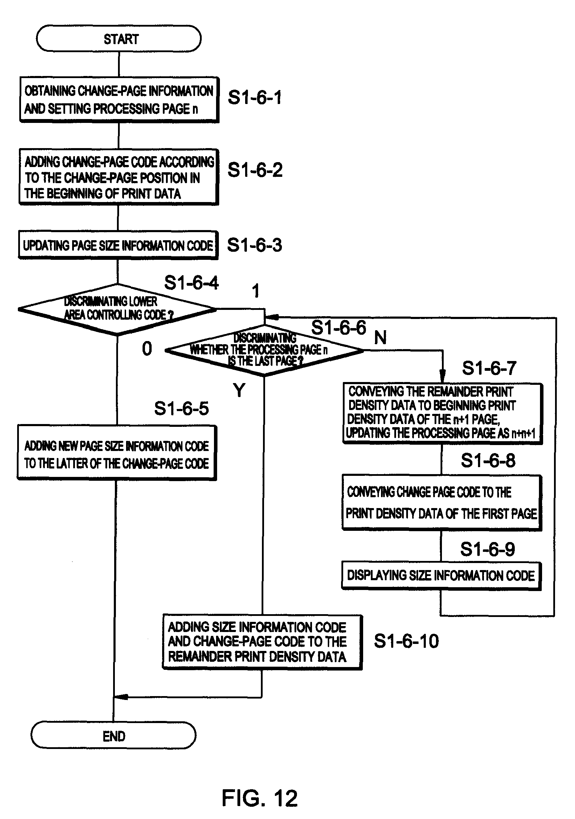

The following is a detailed description about the step s1-6 in FIG. 3. FIG. 12 is a detailed flow chart of the step s1-6. The following is a detailed illustration about FIG. 11 by an order from the step s1-6-1 to the step s1-6-10.

Step s1-6-1: the print data processing function 9-5 (shown in FIG. 2) reads out the change-page code containing page number 30-1 (shown in FIG. 10) therein from the change-page information 30 stored in the data storage area 6-2 (shown in FIG. 2) in the step s1-5. The processing page number n is supposed to be equal to the page number 30-1 (here, citing the first page as an example, as shown in FIG. 11). Step s1-6-2: the print data processing function 9-5 (shown in FIG. 2) adds the change-page code 12-3 (page redescription function 9-5a, shown in FIG. 2) to the designated position in print density data 12-2 of the nth page in FIG. 5 (citing the first page as an example, as shown in FIG. 11) according to the change-page insertion position 30-4 in the beginning of the print data (shown in FIG. 10).

Step s1-6-3: the print data processing function 9-5 (shown in FIG. 2) updates the nth page size information code 12-1 (shown in FIG. 5) according to the size of the print density data 12-2 of the new nth page (supposed n=1). Step s1-6-4: after the print data processing function 9-5 (shown in FIG. 2) captured the lower area controlling code 30-3 of the change-page information 30 (shown in FIG. 5), if the user chooses "generating a new page" (code 0), the next step is s1-6-5, while if the user choose "move to the next page" (code 1), the next step is s1-6-6.

Step s1-6-5: the print data processing function 9-5 (shown in FIG. 2) generates a page size information code 12-1 (shown in FIG. 5) of a new page since a new page is generated. The new page is edited according to corresponding data size of the area below the change-page position.

Step s1-6-6: the print data processing function 9-5 (shown in FIG. 2) compares the processing page number n with the page number of the last page in the print data, if they are identical, then go to the next step s1-6-10, otherwise, go to the next step s1-6-7.

Step s1-6-7: the print data processing function 9-5 (shown in FIG. 2) conveys the remainder print density data to beginning of the print density data of the next page (n+1) and changes the processing page number from n to n+1 (here, n=2). Step s1-6-8: after conveying the remainder print density data in the step s1-6-7, the print data processing function 9-5 (shown in FIG. 2) conveys change page code in the print density data 13-2 of the nth page (shown in FIG.5) according to the exceeding data of the first page. Step s1-6-9: the print data processing function 9-5 (shown in FIG. 2) changes the size information code 13-1 of the nth page (n=2) according to the print density data 13-2 the new nth page (shown in FIG.5).

Step s1-6-10: the print data processing function 9-5 (shown in FIG. 2) generates a new size information code according to the remainder size of the print density data, and adds to the change-page code 12-3 after the print density data thereby generating a last new page.

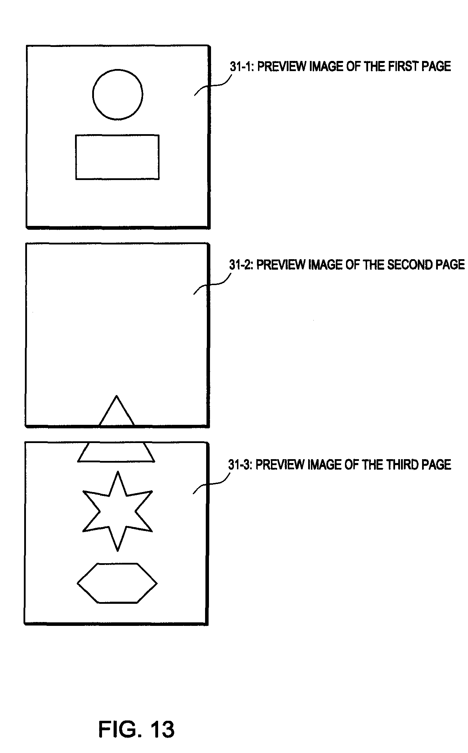

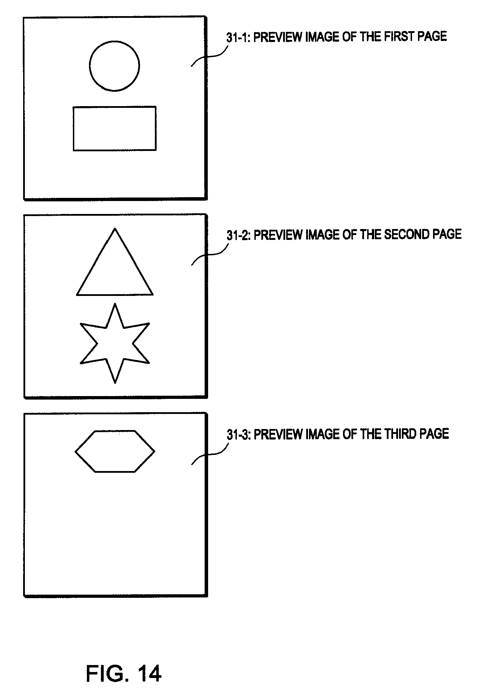

Following descriptions are the differences between entering into the step s1-6-5 and the step 1-6-6 from the step s1-6-4 with reference to the preview image. FIG. 13 is an example of the preview image after being edited again. FIG. 13 shows about an image of a new page generated during processing the remainder change-page area. FIG. 14 is another example of the preview image after being edited once more. FIG. 14 shows about an image of the next page after moving thereto during processing the remainder change-page area.

During entering into the above-mentioned step s1-6-5 from the step s1-6-4, at the time that generating the new page (shown in FIG. 13), one part of a triangle in the preview image 31-1 of the first page is removed. A round and square in the preview image of the first page shown in FIG. 11 is removed thereby forming a preview image 31-2 of the second page. The preview image of the third page is identical with the preview image 31-2 of the second page in FIG. 11.

Furthermore, during entering into the step s1-6-5 from the step s1-6-4, at the time that moving to the next page (shown in FIG. 14), one part of the triangle in the preview image 31-1 of the first page is removed. The preview image 31-2 of the second page is formed by adding the remainder image below the change-page position 32-1 of the first page in FIG. 11 to the preview image 31-2 of the second image in FIG. 11. As a result, the original rhombus in the second page is beyond the range of the second page. The preview image 31-3 of the third page contains the rhombus which is original in the second page

Therefore, according to the information processing apparatus 100 in the first embodiment, in condition that a triangle is cut apart and arranged in the first and second page respectively after being first edited, one part of the triangle can be removed just like the first preview image 31-1 in FIG. 13, or like FIG. 14 showing a round and a square in the first preview image 31-1, showing a triangle and a star in the second preview image 31-2, showing a rhombus in the third preview image 31-3.

As mentioned above, in the first embodiment, when the print data converted from the image data is captured, the information processing apparatus can execute the change-page position setting function which can set the change-page position in the preview image, and the print data processing function which can recompile the print data according to the change-page position, thereby correcting the unexpected preview image. Thus, the present information processing apparatus 100 can overcome the mentioned shortcomings of the conventional information processing apparatus. Moreover, the edition processing in the present invention is easier than those of the conventional because of executing the print data processing function to recompile the print data directly after converted from the image data.

The above mentioned print data processing function 9-1 (FIG. 2), data storing and reading function 9-2 (FIG. 2), the preview displaying 9-3 (FIG. 2), the change-page setting function 9-4 (FIG. 2) and the print data processing function 9-5 (FIG. 2) are all controlled by the controlling device 9 (FIG. 2). However, the present invention is not limited to this. The above mentioned functions can be partly or all formed by special electrical circuit.

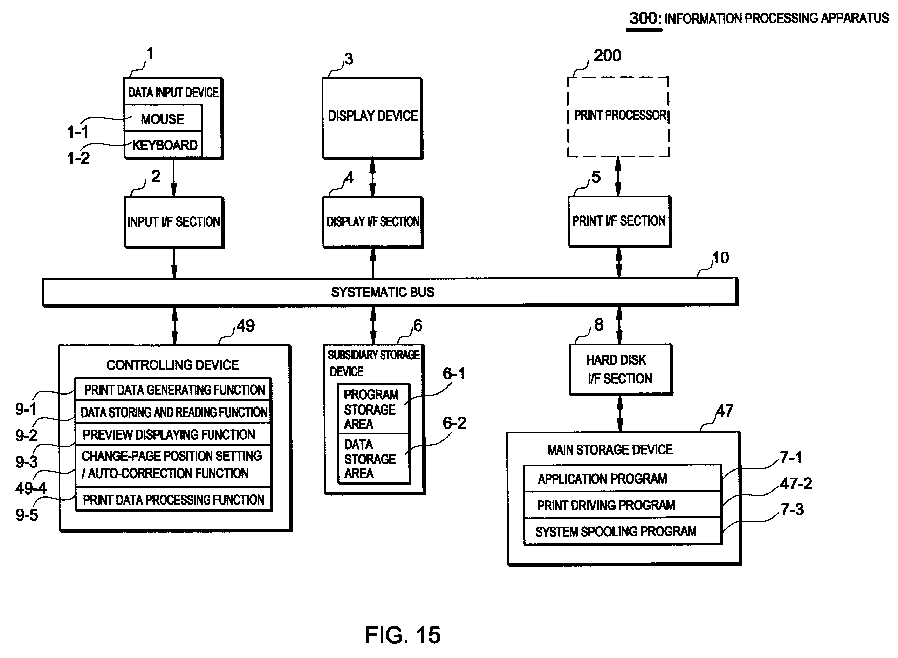

FIG. 15 is a block diagram showing the overall constructions of an information processing apparatus according to the second embodiment of the present invention. Referring to FIG. 15, the information processing apparatus 300 in the second embodiment comprises data input device 1, input I/F section 2, a display device 3, a display I/F section 4, a print I/F section 5, a subsidiary storage device 6, a main storage device 47, a hard disk I/F section 8, a controlling device 49 and a systematic bus 10. The difference between the first and second embodiment will be explained below. Elements in the second embodiment which are identical to those in the first embodiment will be denoted with the same symbol.

The main storage device 47 and the controlling device 49 are memory body for storing all programs and data in advance. Usually, use hard disk space as the memory body. The hard disk space stores an application program 7-1 for being executed by the information processing apparatus 300, a print driving program 47-2 and a system spooling program 7-3. Wherein, the print driving program 47-2 is used for successfully connecting the print processor or the like to the information processing apparatus 300, the system spooling program 7-3 is used for temporarily storing print data which is outputted to the print processor 200.

The controlling device 49 is substantially a CPU connected to the systematic bus for controlling all functions of the information processing apparatus 300. Especially in the second embodiment, when the controlling device 49 executes corresponding program in the print driving application 47-2, following functions can be realized. Print data generating function 9-1 is performing for converting the image data into the print data. Data storing and reading function 9-2 is used for reading and writing programs and data from the subsidiary storage device 6 and the main storage device 47. Preview displaying 9-3 can display the print data stored in the subsidiary storage device 6 on the display device 3. Print data processing function 9-5 is used for compiling the print data stored in the subsidiary storage device 6 according to the designated change-page position. Change-page position setting /auto-correction function 49-4 is performing for setting the change-page position and auto correcting it.

Individual function and signal flow of the above mentioned print data generating function 9-1, data storing and reading function 9-2, preview displaying function 9-3, change-page position setting /auto-correction function 49-4 and the print data processing function 9-5 will be explained as below.

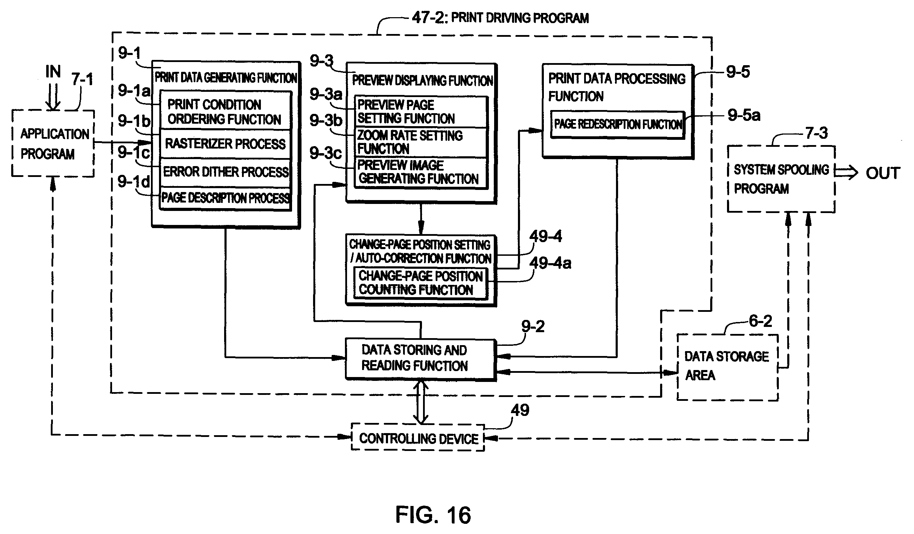

FIG. 16 is a block diagram showing the function of the information processing apparatus in the second embodiment. The print driving program 47-2 is read out from the main storage device 47 (shown in FIG. 15) by the controlling device 49 and stored in a program storage area 6-1 of the subsidiary storage device 6 (shown in FIG. 15) in a startup state. Similarly, the application program 7-1 and the system spooling program 7-3 are read out from the main storage device 47 by the controlling device 49 and then stored in the program storage area 6-1 (FIG. 15) of the subsidiary storage device 6, and are also in the startup state at any time.

Similar to the first embodiment, image information which is inputted through the keyboard 1-2 and the mouse 1-1 of the data input device 1 (shown in FIG. 15) is transformed into image data by the application program 7-1. The image data is then sent to the print data generating function 9-1 and transformed into print data.

The data storing and reading function 9-2 stores the print data in the data storage area 6-2 temporarily. And then the print data is read out from the data storage area 6-2 through the data storing and reading function 9-2, and displayed on the display device 3 (FIG. 15) via the preview displaying function 9-3.

A change-page strip is displayed on a display image by the display device 3 via the change-page position setting / auto-correction function 49-4 (shown in FIG. 15), which provides a user for designating the change-page position (which will be explained detailedly hereinafter). The change-page position setting / auto-correction function 49-4 will automatically adjust the change-page position with which the least blank line (for example, only one blank line) between the change-page strip and the display image according to the designated change-page position by the user.

The change-page position is automatically ordered to cause the blank line between the change-page strip and the display image is the least (for example, only one blank line). And change-page position counting function 49-4a can work out the change-page position in the print data. The number of rows of the blank line can be adjusted conveniently according to the density of the print data.

After the change-page position was designated, the print data is sent to the print data processing function 9-5 and recompiled according to the change-page position therein (which will be discussed detailedly hereinbelow). The change-page code is reordered via page redescription function 9-5b and is stored in the data storage area 6-2 via the data storing and reading function 9-5b. The recompiled print data is conveyed to the print processor 200 through the system spooling program (FIG. 15).

The procedures of the information processing apparatus in the second embodiment will be explained as follows with reference to the flow chart. Similar to the first embodiment, first to illustrate the whole procedures of the information processing apparatus in the second embodiment, and then to introduce the processes that relate to the present invention with reference to the more detailed flow chart.

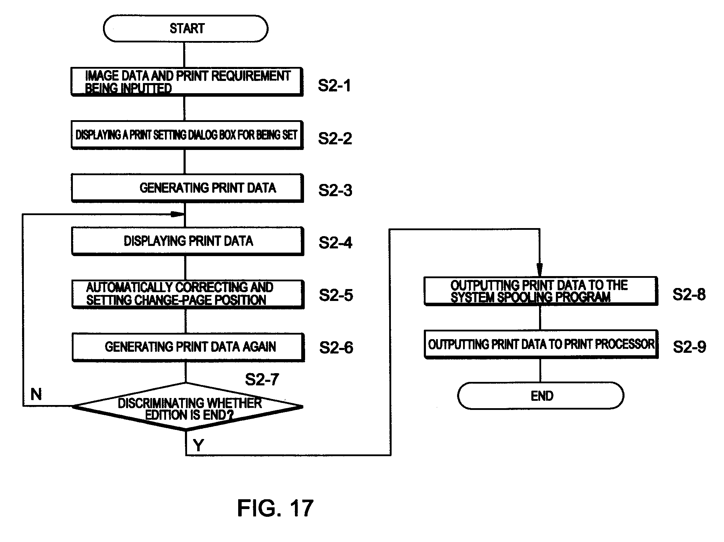

FIG. 17 is a flow chart which shown all processes of the information processing apparatus in the second embodiment. This drawing is shown with a flow chart to explain signal flow in FIG. 16.The whole procedures of the information processing apparatus in the second embodiment will be explained step by step from step s2-1 to step 2-9. The process that different with the first embodiment will be detailed explained, while the process used in the first embodiment will be briefly explained.

Step s2-1: a print job is generated. Step s2-2: the same dialog box (FIG. 4) as that in the first embodiment is displayed on the display device 3 via the print data generating function 9-1 (shown in FIG. 16). The user can set print request through the dialog box (print request ordering function 9-1a, shown in FIG. 16).

Step s2-3: according to the ordered print request, the image data is transformed into the print data just like that in the first embodiment through the print data generating function 9-1. The print data is temporarily stored in the data storage area 6-2 via the data storing and reading function 9-2 (shown in FIG. 16).

Step s2-4: similar to the first embodiment, the print data is read out from the data storage area 6-2 via the data storing and reading function 9-2 (shown in FIG. 16) and displayed as a preview image on the display device 3.

Step s2-5: the change-page position setting / auto-correction function 49-4 (shown in FIG. 16) provides the change-page strip on the preview image on the display device (shown in FIG. 5) for being designated by the user. The designated change-page position on the preview image is automatically corrected through the change-page position setting /auto-correction function 49-4. The change-page position counting function 49-4a works out the change-page position in the print data according to the corrected change-page position, which will be explained detailedly hereinbelow.

Step s2-6: in the same way of the first embodiment, the print data is generated again by the print data processing function 9-5 and stored in the data storage area 6-2 temporarily through the data storing and reading function 9-2, as shown in FIG, 16. Step s 2-7: if the change-page position needs to be edited continually, the information processing apparatus will go back to the step s2-4 and go on the same procedure until the change-page position is accepted.

Step s2-8: in the same way of the first embodiment, the print data generated from the above steps is sent to the system spooling program 7-3 (shown in FIG. 16). Step s2-9: similar to the first embodiment, the print data generated from the system spooling program 7-3 (shown in FIG. 16) is outputted to the print processor 200 (shown in FIG. 15), and the procedure is over.

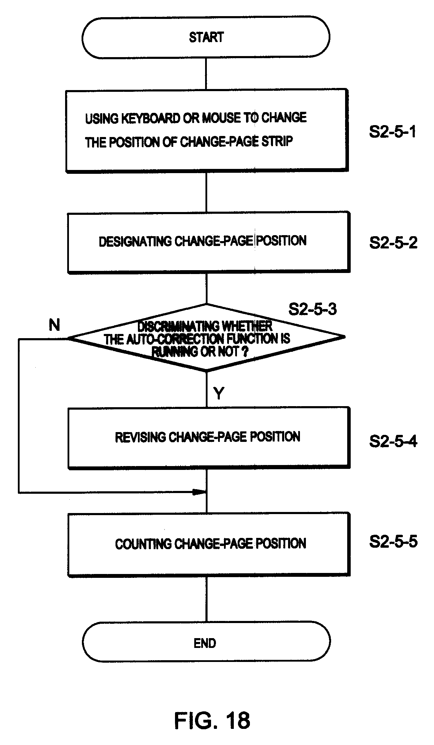

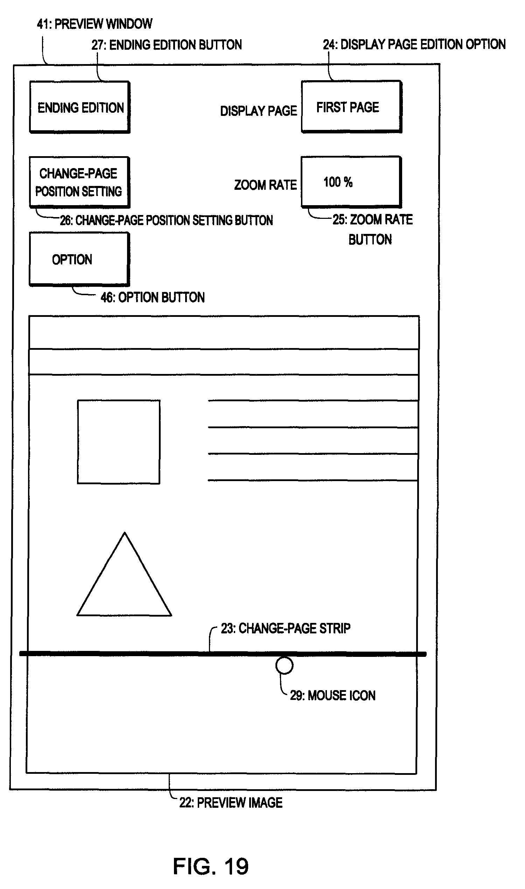

The following is a detailed description about the step s2-5 in the above flow in FIG. 17. FIG. 18 is a detailed flow chart of the step s2-5 in the above flow in FIG. 17. FIG. 19 is a preview image in the second embodiment and shows an example of preview image on the display device 3 (FIG. 15) appeared in the description of FIG. 18. As shown in FIG. 19, in a preview window 41, a frame of the preview image 22, a change-page strip 23 in the frame used for being designated the change-page position, and a mouse icon 29 used for drawing the change-page strip 23 are shown. Outside of the frame of the preview image 22, a display page edition option 24, a zoom rate option 25, a change-page position setting button 26, an ending edition button 27 and an option button 46 are all shown.

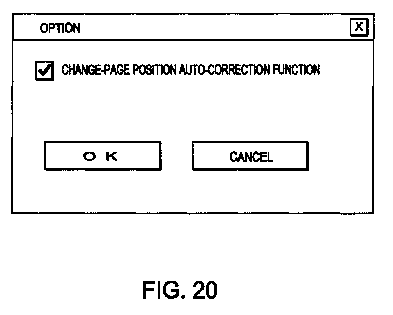

FIG. 20 shows a change-page position auto-correction screen. FIG. 20 shows with a dialog box for being ordered whether the designated change-page position needs to be corrected, when the user designated the change-page position.

The following is a detailed description about the step s2-5 by an order from step s2-5-1 to s2-5-5 with reference to FIG. 17.

Step s2-5-1: the change-page strip 23 is drawn to the expected position through the mouse 1-1 (shown in FIG. 15) by the user. Step s2-5-2: when the user pushed the change-page setting button through the mouse 1-1 (FIG. 15), the change-page position setting / auto-correction function 49-4 (FIG. 16) designates the change-page position at the pointed position temporarily. At this time, if the user pushes the option button 46 through the mouse 1-1 (shown in FIG. 15), the change-page position auto-correction dialog box will be shown on the display device 3 (FIG. 15), which is shown in FIG. 20.

Step s2-5-3: whether the change-page position setting /auto-correction function is executed or not is discriminated in this step. If the user chooses ok button, then the procedure will enter the step s2-5-4. If the user chooses cancel button, the procedure will enter the step s2-5-5. Step s2-5-4: the change-page position setting / auto-correction function 49-4 checks forwardly from the change-page position to confirm whether there is continuous blank line in this page or not, and then adjusts the change-page position to ensure the rows of blank line in this page less than that of predetermined (usually, zero or one blank line).

Step s2-5-5: if the change-page position setting / auto-correction function 49-4 is cancelled in the step s2-5-3, the print data processing function 9-5 will work out the change-page position according to the change-page position designated by the user and the choosing result of the print data of the remainder area below the designated change-page position (like the first embodiment). If the change-page position setting /auto-correction function 49-4 is selected to execute in the step s2-5-3, the change-page will be work out according to the corrected change-page position and the choosing result of the print data of the remainder area below the corrected change-page position (which is same to that of the first embodiment). The method for counting the change-page position and capturing the change-page information 30 (FIG. 10) is in the same way of the first embodiment, thus, description about this is omitted here. Subsequently, the change-page information 30 is stored in the data storage area 6-2 temporarily. The procedure of step s2-5 is over after the above-mentioned processes are carried out.

Just as explained in the above, The information processing apparatus in the second embodiment has change-page position setting / auto-correction function 49-4, which can correct the change-page position designated by the user until the blank line is less than that of the predetermined. Therefore, the information processing apparatus in the second embodiment not only realizes the same function as that of the first embodiment, but also can prevent unnecessary linage from increasing.

The above mentioned print data generating function 9-1, data storing and reading function 9-2, preview displaying function 9-3, change-page setting / auto-correction function 49-4 and print data processing function 9-5 are all controlled by the controlling device 49 (shown in FIG. 15). However, the present invention is not limited to this. The above mentioned functions can be partly or all realized by electrical circuits.

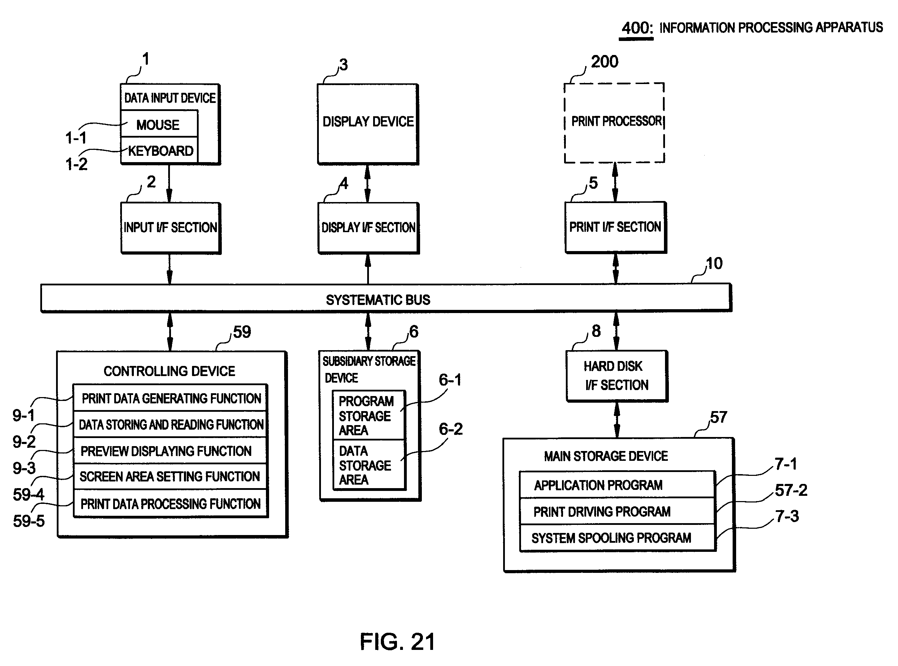

FIG. 21 is a block diagram showing the overall constructions of an information processing apparatus according to the third embodiment of the present invention□Referring to FIG. 21, an information processing apparatus 400 in the third embodiment comprises a data input device 1, an input I/F section 2, a display device 3, a display I/F section 4, a print I/F section 5, a subsidiary storage device 6, a main storage device 57, a hard disk I/F section 8, a controlling device 59 and a systematic bus 10. The difference between the first and third embodiment will be explained below. Elements in the third embodiment which are identical to those in the first embodiment will be denoted with the same symbol.

The main storage device 57 and the controlling device 59 are memory body for storing all programs and data. Usually, use a hard disk space the memory body. The hard disk stores an application program 7-1 for being executed by the information processing apparatus 400, a print driving program 57-2 and a system spooling program 7-3. Wherein, the print driving program 47-2 is used for successfully connecting the print processor or the like to the information processing apparatus 400, the system spooling program 7-3 is used for temporarily storing print data which is outputted to the print processor 200.

The controlling device 59 is substantially a CPU connected to the systematic bus 10 for controlling all functions of the information processing apparatus 400. Particularly in the second embodiment, when the controlling device 59 runs corresponding program in the print driving application 57-2, following functions can be realized. Print data generating function 9-1 is performing for converting the image data into the print data. Data storing and reading function 9-2 is used for reading and writing programs and data from the subsidiary storage device 6 and the main storage device 57. Preview displaying 9-3 can display the print data stored in the subsidiary storage device 6 on the display device 3. Print data processing function 59-5 is used for compiling the print data stored in the subsidiary storage device 6 according to the designated change-page position. Screen area setting function 59-4 is performing for screening print data in the designated area according to the result of preview.

Individual function and signal flow of the above mentioned print data generating function 9-1, data storing and reading function 9-2, preview displaying function 9-3, screen area setting function 59-4and the print data processing function 9-5 will be explained as below.

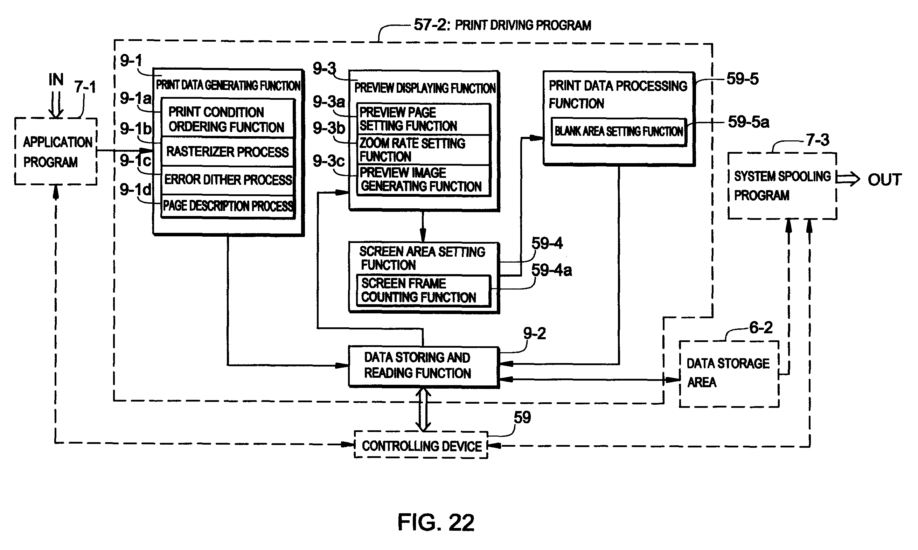

FIG. 22 is a block diagram showing the function of the information processing apparatus in the third embodiment. The print driving program 57-2 is read out from the main storage device 57 (shown in FIG. 21) by the controlling device 59 and stored in a program storage area 6-1 of the subsidiary storage device 6 (shown in FIG. 21) in a startup state. Similarly, the application program 7-1 and the system spooling program 7-3 are read out from the main storage device 57 by the controlling device 59 and then stored in the program storage area 6-1 (FIG. 21) of the subsidiary storage device 6, and are also in the startup state at any time.

Similar to the first embodiment, image information which is inputted through the keyboard 1-2 and the mouse 1-1 of the data input device 1 (shown in FIG. 15) is converted into image data by the application program 7-1. The image data is then sent to the print data generating function 9-1 and transformed into print data.

The data storing and reading function 9-2 stores the print data in the data storage area 6-2 temporarily. And then the print data is read out from the data storage area 6-2 through the data storing and reading function 9-2, and displayed on the display device 3 (FIG. 15) via the preview displaying function 9-3.

Subsequently, the screen area setting function 59-4 provides a screen area ordering frame on the preview image on the display device 3 (shown in FIG. 21) for a user to designated a screen area (which will be explained detailedly hereinafter). The screen area setting function 59-4 sets the print data of an area (screening area) on the preview image as zero according to the screening area designated by the user. The screen area setting function 59-4 works out the print data of the area within the screen frame via the screen frame counting function 59-4a.

After the screen area was designated, the print data is sent to the print data processing function 59-5. The print data processing function 59-5 changes the print data in the screen area into zero via blank area setting function 59-a. The generated print data outputted from the print data processing function 59-5 is stored in the data storage area 6-2 via the data storing and reading function 9-5b again and outputted through the system spooling program 7-3.

The procedures of the information processing apparatus in the third embodiment will be explained as follows with reference to the flow chart. Similar to the first embodiment, first to illustrate the whole procedures of the information processing apparatus in the third embodiment, and then to introduce the processes that relate to the present invention with reference to the more detailed flow chart.

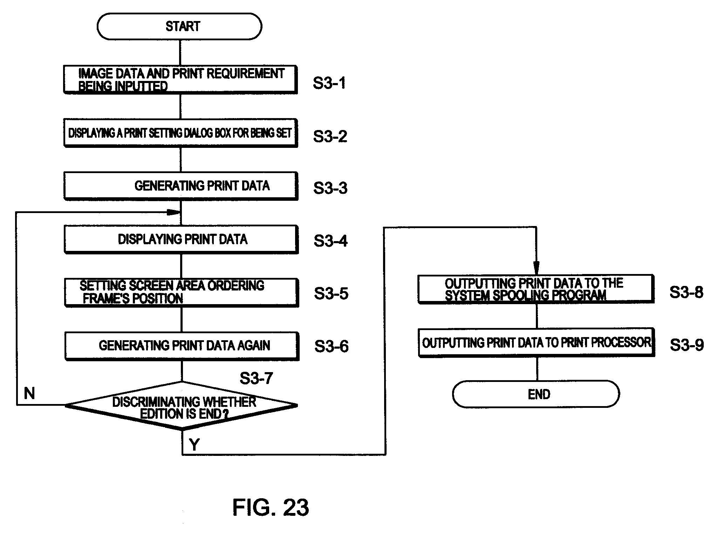

FIG. 23 is a flow chart which shown all processes of the information processing apparatus in the third embodiment. FIG. 23 is shown with a flow chart to explain signal flow in FIG. 22. The whole procedures of the information processing apparatus in the third embodiment will be explained step by step from step s3-1 to step 3-9. The process that different with the first embodiment will be detailed explained, while the process used in the first embodiment will be briefly explained.

Step s3-1: a print job is generated. Step s3-2: the same dialog box (FIG. 4) as that in the first embodiment is displayed on the display device 3 via the print data generating function 9-1 (shown in FIG. 22). The user can set print request through the dialog box (print request ordering function 9-1a, shown in FIG. 22).

Step s3-2: according to the ordered print request, the image data is transformed into the print data just like that in the first embodiment through the print data generating function 9-1 (FIG. 22). The print data is temporarily stored in the data storage area 6-2 via the data storing and reading function 9-2 (shown in FIG. 22)

Step s 2-4: similar to the first embodiment, the print data is read out from the data storage area 6-2 via the data storing and reading function 9-2 (shown in FIG. 22) and displayed as a preview image on the display device 3.

Step s3-5: the screen area setting function 59-4 (shown in FIG. 22) provides the screen area frame on the preview image on the display device 3 (shown in FIG. 21) for the user to designate the screen area. The print data of the designated screen area on the preview image is defined with zero through the screen area setting function 59-4. The screen frame counting function 59-4a works out the print data of the screen area. This step will be explained detailedly hereinbelow, and now go to the next step.

Step s3-6: in the same way of the first embodiment, the print data is generated again by the print data processing function 9-5 and stored in the data storage area 6-2 temporarily through the data storing and reading function 9-2, as shown in FIG. 22. Step s3-7: if the screen area needs to be edited continually, the information processing apparatus will go back to the step s3-4 and go on the same procedure until complete the edition.

Step s3-8: in the same way of the first embodiment, the print data generated from the above steps is sent to the system spooling program 7-3 (shown in FIG. 22). Step s3-9: similar to the first embodiment, the print data from the system spooling program 7-3 (shown in FIG. 22) is outputted to the print processor 200, hereto the procedure is over.

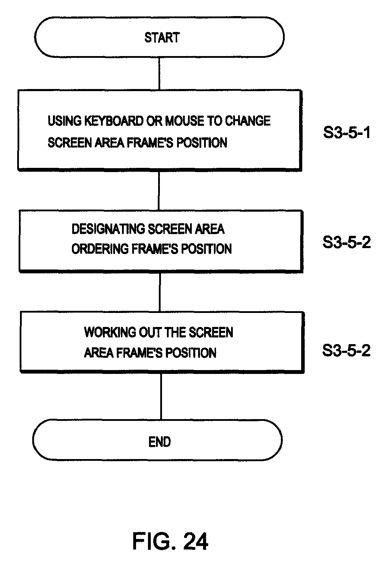

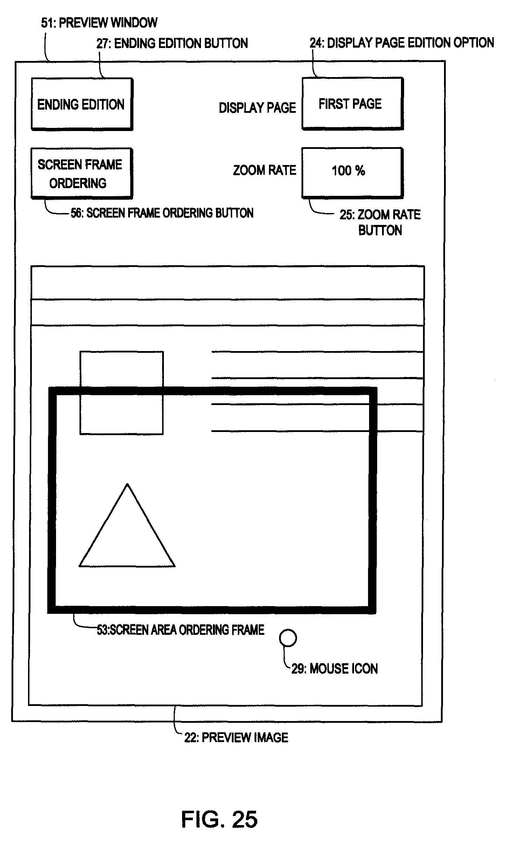

The following is a detailed description about the step s3-5 and step s3-6 in the above flow in FIG. 23. FIG. 24 is a detailed flow chart of the step s3-5 in the above flow in FIG. 23. FIG. 25 is a preview image in the third embodiment. This drawing shows an example of preview image on the display device 3 (FIG. 21) appeared in the description of FIG. 24. As shown in FIG. 25, within a preview window 51, a frame of the preview image 22, a screen area ordering frame 53 and a mouse icon 29 used for drawing the screen area ordering frame 53 are shown. Outside of the frame of the preview image 22, a display page edition option 24, a zoom rate option 25, a screen frame ordering button 56 and an ending edition button 27 are all shown.

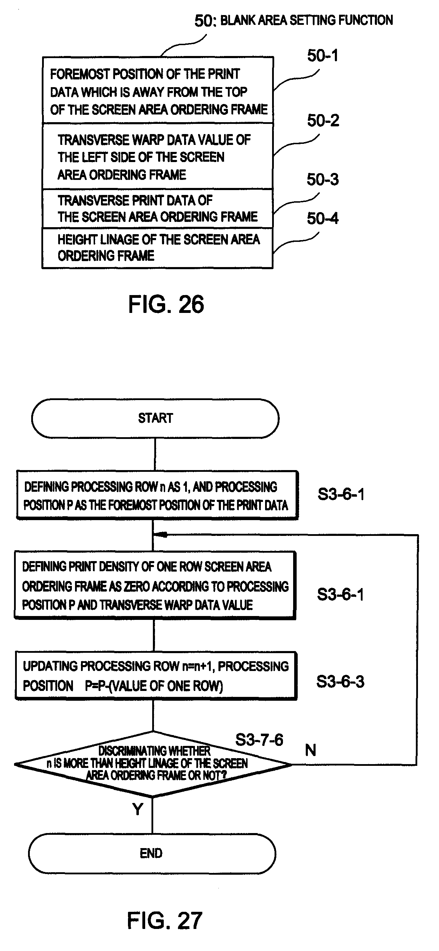

FIG. 26 is shown with a blank area setting screen. This drawing is shown with a dialog box used in explaining FIG. 24. When the user pushes the screen frame ordering button 56 by the mouse 1-1 (shown in FIG. 21), the screen area is determined. The screen area setting function 59-4 (shown in FIG. 22) executes the screen frame counting function 59-4a thereby forming blank area setting information.

The following is a detailed explanation about the step s3-5 by an order from step s3-5-1 to step s3-5-3.

Step s3-5-1: the screen area ordering frame 53 is drawn to the expected position through the mouse 1-1 (shown in FIG. 15) by the user. Step s3-5-2: after the screen frame ordering button 56 is pushed by the mouse 1-1 (shown in FIG. 21), the screen area setting function 59-4 (shown in FIG. 22) designates the screen area frame at the position according to the user's expect. The screen frame counting function 59-4a works out the position of the screen area frame in the print data according to the designated position of the screen area frame.

Step s3-5-3: the screen area setting function 59-4 (shown in FIG. 22) works out the screen area frame's position where the print data is zero according to the position of the screen area frame designated by the user. The following is a detailed explanation about this step. According to the designated screen area, the screen area setting function 59-4 compiles the page edition information shown in FIG. 26 as following operations. Change the preview image's position above the screen area ordering frame 53 (shown in FIG. 25) to the beginning position of the print data, and then insert it in the foremost position 50-1 of the print data which is away from the top of the screen area ordering frame 53 (FIG. 25). Change the left preview image's position of the screen area ordering frame 53 into the print data value, and then insert the value in the transverse warp data value 50-2 of the left side of the screen area ordering frame 53 (FIG. 25). Convert the transverse value of the screen area ordering frame 53 (FIG. 25) into the print data value, and insert the print data value in the transverse print data 50-3 of the screen area ordering frame 53. Finally, convert the preview image's height of the screen area ordering frame 53 (FIG. 25) into the print data linage, and then insert the print data linage in the height linage 50-4 of the screen area ordering frame (screen frame counting function 59-4a). The procedure of step s3-5 is over after the above-mentioned operations are carried out.

The following is a detailed description about the step s3-6 in the above flow in FIG. 23. FIG.27 is a detailed flow chart of step s3-6 by an order from step s3-6-1 to step s3-6-4.

Step s3-6-1: in initial stage, the print data processing function 59-5 (shown in FIG. 22) defines processing row n as 1, and processing position p as the foremost position of the print data 50-1(captured from the blank area setting information stored in the data storage area 6-2 (FIG. 2) in the step s3-5).

Step s3-6-2: the print processing function 59-5 (FIG. 22) converts all the print data values, which are identical to the transverse print data values 50-3 of the screen area ordering frame, from the beginning of the transverse warp data value 50-2 of the left side of the screen area ordering frame into zero at the processing position p (blank area setting function 59-5a, as shown in FIG. 22).

Step s3-6-3: the print data processing function 59-5 (FIG. 22) adds 1 to the processing row n, and adds one row value of the print data contained in the print information code 11 (FIG. 5) to the processing position p.

Step s3-6-4: if the value of the processing row n exceeds height row 50-4 of the screen area ordering frame (FIG. 22), the procedure of the print data processing function 59-5 (FIG. 22) is over, otherwise would return the step s3-6-2 and go on the same operation until the procedure is over.

According to above explanation, the change-page position setting function is replaced by the screen area setting function in the third embodiment. Hence, only expect image can be outputted and the unwanted image is excluded.

The above mentioned print data generating function 9-1, data storing and reading function 9-2, preview displaying function 9-3, screen area setting function 59-4 and print data processing function 9-5 are all controlled by the controlling device 59 (shown in FIG. 21). However, the present invention is not limited to this. The above mentioned functions can also be partly or all realized by special electrical circuits.

The above mentioned information processing apparatus is carried out in condition that the information processing apparatus is connected to the print processor. However, the present invention is not limited to this. The information processing apparatus can also be connected to a copy machine or the like.

## Claims

1. An information processing apparatus used for generating print data from image information and outputting to a print equipment, comprising:
a print data generator for converting image information into print data;
a print data storage for storing the print data generated by the generator;
a display device for previewing a preview image according to the print data stored in the print data storage;
an input unit for inputting position information according to the preview image; and
a print data processing unit for compiling the print data stored in the print data storage according to the position information inputted by the input unit.

2. An information processing apparatus according to Claim 1, wherein the print data processing unit compiles the print data which is originally in different pages separated by a change-page position of the position information into new print data that in one page.

3. An information processing apparatus according to Claim 1, wherein the input unit includes a correction processor for correcting the change-page position so as to make number of blank line ahead of the change-page position to be equal to a predetermined row.

4. An information processing apparatus according to Claim 3, wherein the correction processor determines the number of blank line ahead of the change-page position according to density of the print data.

5. An information processing apparatus used for generating print data from image information and outputting to a print equipment, comprising:
a print data generator for converting image information into print data;
a print data storage for storing the print data generated by the generator;
a display device for previewing a preview image according to the print data stored in the print data storage;
a screen area determiner for determining a blank area on the preview image; and
a print data processing unit for converting the print data stored in the print data storage according to the blank area determined by the screen area determiner.

6. An information processing apparatus for outputting data to a print equipment, comprising:
a storage for storing first data;
a display device for previewing a preview image according to the first data;
an input unit for inputting position information according to the preview image; and
a data processing unit for compiling the first data stored in the storage according to the position information inputted by the input unit so as to generating second data.

7. An information processing apparatus according to Claim 6, wherein the data processing unit includes a change-page determiner for determining a change-page of the second data according to the position information.

8. An information processing apparatus according to Claim 6, wherein the data processing unit has a screen area determiner for screening part of first data according to the position information.

9. An information processing apparatus according to Claim 6, wherein the input unit has a frame determiner for drawing a frame round part of the preview image.
